(19) Europäisches Patentamt
European Patent Office
Office européen des brevets

(11) EP 0 828 868 B1

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(21) Anmeldenummer: **96914212.4**

(22) Anmeldetag: **15.05.1996**

(51) Int Cl.[7]: **D01F 2/00**, D01F 2/04, D01F 2/06, D01F 2/10, D06P 3/60, D06P 3/62, D06P 3/66, C08B 31/12

(86) Internationale Anmeldenummer:
**PCT/EP96/02084**

(87) Internationale Veröffentlichungsnummer:
**WO 96/037642 (28.11.1996 Gazette 1996/52)**

(54) **AMINIERUNG VON REGENERATCELLULOSE MIT HOCHSUBSTITUIERTEN STÄRKEN UND VERWENDUNG DER MODIFIZIERTEN FASERN**

AMINATION OF REGENERATED CELLULOSE WITH HIGHLY SUBSTITUTED STARCHES AND USE OF THE THUS MODIFIED FIBRES

AMINATION DE CELLULOSE REGENEREE AVEC DES AMIDONS A HAUT DEGRE DE SUBSTITUTION ET UTILISATION DES FIBRES AINSI MODIFIEES

(84) Benannte Vertragsstaaten:
**AT DE ES FI GB IT NL SE**

(30) Priorität: **24.05.1995 DE 19519023**

(43) Veröffentlichungstag der Anmeldung:
**18.03.1998 Patentblatt 1998/12**

(73) Patentinhaber: **Acordis Kelheim GmbH
93309 Kelheim (DE)**

(72) Erfinder:
- **SCHRELL, Andreas
D-65929 Frankfurt am Main (DE)**
- **HUBER, Bernd
D-93309 Kelheim (DE)**

(74) Vertreter: **Fett, Günter
CPW GmbH
Postfach 10 01 49
42097 Wuppertal (DE)**

(56) Entgegenhaltungen:
**EP-A- 0 665 311**
**EP-A- 0 683 251**
**WO-A-96/37641**
**WO-A-96/37643**
**DE-A- 1 942 742**
**DE-A- 2 131 560**
**US-A- 3 066 032**

- **CHEMICAL ABSTRACTS, vol. 86, no. 8, 21.Februar 1977 Columbus, Ohio, US; abstract no. 44681c, HASHIMOTO T ET AL: "Regenerated cellulose fibers and films" Seite 48; Spalte 1; XP002012563 & JP,A,51 121 062**
- **DATABASE WPI Section Ch, Week 7737 Derwent Publications Ltd., London, GB; Class A11, AN 77-65681Y XP002012678 & JP,A,52 091 913 (NITTO BOSEKI KK) , 2.August 1977**
- **Ullmann Encyklopädie der technischen Chemie, 4. Auflage, Band 22 (1982); Verlag Chemie, Weinheim (DE); p. 197**
- **Encyclopedia of Polymer Science and Engineering, vol. 7 (1987); John Wiley & Sons, New York (US); p. 610**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

In ihrem Färbeverhalten gleichen Viskosefasern im wesentlichen denen der Baumwollfasern. Beim derzeitigen Stand der Technik sind zum Färben cellulosischer Natur- oder Regeneratfasern alkalispendende Mittel, sowie Elektrolyte notwendig, um befriedigende Fixierergebnisse mit Reaktivfarbstoffen zu erzielen. Für ökologisch verbesserte Färbeverfahren stellen aber gerade diese notwendigen Zusätze nicht zu akzeptierende Umweltbelastungen dar. Für die Zukunft von zunehmender Bedeutung werden daher Regeneratfasern, aufbauend auf Cellulose, sein, die zuvor ohne zusätzliche Prozeßschritte in hoch farbstoffaffine, d.h. salz- und alkalifrei färbbare, Modifikationen überführt wurden. So veränderte Fasern ähneln in ihrem chemischen Verhalten tierischen Fasern, wie Wolle oder Seide, und können in bestimmten Grenzen unter neutralen Bedingungen mit anionischen Farbstoffen, ohne weitere Salz- oder Alkalizusätze, gefärbt werden.

Ein besonderes Anwendungsgebiet werden in diesem Zusammenhang Mischgewebe, wie z.B. Polyester/modifizierte Viskose, sein, die dann einbadig gefärbt werden können.

Modifizierungen von Viskose sind in der Literatur bereits beschrieben. Die DE-A-1 948 487 beschreibt ein Verfahren zur Herstellung von Viskosefasern mit neuartigen Färbeeigenschaften. Im Verlauf der Herstellung kommen Polyaminamide zum Einsatz, die nicht nur den nativen Charakter der Faser bedeutend stören, sondern auch ein ungenügendes Echtheitsniveau der anschließenden Färbung zur Folge haben.

Auch die DE-A-1 469 062 beschäftigt sich mit "aminalisierten Fasern". Bei den Zusätzen handelt es sich um Aminoethyl- und Diethylaminoethylcellulosen in hoher Konzentration, das Einfärben geschieht ausschließlich mit Säurefarbstoffen. Nachteilig bei diesem Verfahren ist, daß die Zusätze zunächst aufwendig synthetisiert und isoliert werden müssen und darüberhinaus sehr teuer sind.

Die Aufgabe der vorliegenden Erfindung war es, eine Viskosefaser herzustellen, die bezüglich Färben sowohl mit Reaktiv- als auch mit Direktfarbstoffen bedeutend affiner ist und sich auch sonst in gewünschten Gebrauchseigenschaften positiv von den Standardfasern unterscheidet.

Diese Aufgabe wird überraschenderweise gelöst durch Beimischen von mit aminogruppenhaltigen Verbindungen hcchgradig substituierten Stärkederivaten zu einer Viskosemasse, Celluloselösung oder zu Alkalicellulose und anschließender Verspinnung.

Gegenstand der vorliegenden Erfindung sind aminierte Cellulose-Regeneratfasern, hergestellt, indem man einer Viskosemasse, Alkalicellulose oder Celluloselösung eine mit einer Alkylamin-Verbindung veretherte Stärke mit einem Polymerisationsgrad zwischen 100 und 1000 Anhydroglucoseeinheiten zusetzt und daraus Fasern spinnt, dadurch gekennzeichnet, daß man der Viskosemasse, Alkalicellulose oder Celluloselösung eine mit einem Substitutionsgrad zwischen 0,1 und 3 durch eine oder mehrere mit $C_2$-$C_5$-Alkyl-ammonium-Resten oder $-O-(CH_2)_x-SO_2-(CH_2)_y-N^{\oplus}R_3A^{\ominus}$ veretherte, wasserlösliche Stärke in einer Konzentration von 1 bis 20 Gew.-%, gerechnet als Trockengewicht, bezogen auf den Cellulosegehalt der Spinnmasse, beimischt und daraus Fasern spinnt, wobei die Alkylammoniumreste im Alkylrest noch mit 1 bis 2 weiteren Hydroxy- und Methoxygruppen substituiert sein können und deren Ammoniumgruppe eine mit $C_1$-$C_4$-Alkylgruppen substituierte quartäre Ammoniumgruppe ist und wobei x und y jedes die Zahl 2 oder 3 ist, R gleich oder verschieden Methyl oder Ethyl ist und $A^{\ominus}$ ein Anion bedeutet.

Die veretherten Stärkederivate haben einen Substitutionsgrad zwischen 0,1 und 3. Ein Substitutionsgrad von 3 bedeutet, daß jede der drei freien OH-Gruppen in jeder Glucose-Einheit verethert ist. Ein Substitutionsgrad von 0,1 bedeutet, daß statistisch in jeder zehnten Glucose-Einheit eine OH-Gruppe verethert ist.

Stärken mit einem Substitutionsgrad von etwa 0,05 sind an sich bekannt (Houben-Weyl, 1987, Bd. E 20, Teil 3, S. 2135-2151), solche mit einem Substitutionsgrad von 0,1 und höher sind jedoch noch nicht beschrieben.

Gegenstand der vorliegenden Erfindung sind daher auch vorstehend beschriebene mit Alkylamino-Gruppen veretherte Stärkederivate mit einem Substitutionsgrad zwischen 0,1 und 3, vorzugsweise 0,11 bis 2, mit Ausnahme einer mit einer β-Hydroxypropyl-ammonium-Gruppe veretherten Stärke.

Bevorzugt im Sinne der vorliegenden Erfindung sind besagte Stärkeether, deren Ethergruppe die Formel $-O-(CH_2)_x-NR_2$, $-O-CH_2-CHOH-CH_2-NR_2$, $-O-(CH_2)_x-SO_2-(CH_2)_y-NR_2$, $-O-(CH_2)_x-SO_2-(CH_2)_y-NR^{\oplus}{}_3A^{\ominus}$, $-O-(CH_2)_x-{}^{\oplus}NR_3A^{\ominus}$ oder $-O-CH_2-CHOH-CH_2-NR^{\oplus}{}_3A^{\ominus}$ hat, wobei x und y die Zahl 2 oder 3 ist, R gleich oder verschieden ist und Wasserstoff, Methyl oder Ethyl und A ein Anion, beispielsweise Chlorid oder Sulfat, bedeutet. Besonders bevorzugt sind solche Stärkeether, deren Ethergruppe die Formel $-O-CH_2CH_2-NH_2$, $-O-CH_2-CHOH-CH_2-N^{\ominus}(CH_3)_3$ oder $-O-CH_2CH_2-N^{\oplus}(CH_3)_3$ hat.

Die erfindungsgemäßen Stärkeether mit besagtem hohem Substitutionsgrad sind in Wasser fließfähige bis hochviskose Massen von 1 bis 30 Pas (etwa 20 gew.-%ige wäßrige Lösung), die ohne weitere Aufarbeitung bei der Herstellung der Cellulose-Regeneratfasern der Spinnmasse, Celluloselösung oder Alkalicellulose zugesetzt werden können.

Der Polymerisationsgrad der erfindungsgemäßen Stärkeether liegt zwischen 100 und 1000, vorzugsweise 100 und 400, Anhydroglucoseeinheiten. Bei Polymerisationsgraden kleiner als 100 besteht die Gefahr, daß die Stärkeether nach dem Verspinnen aus der Faser ausgewaschen werden.

Die Herstellung der erfindungsgemäßen Stärkeether erfolgt, indem man eine beliebige Stärke, beispielsweise Kartoffelstärke, Maisstärke oder Weizenstärke, mit einem $C_2$-$C_5$-Alkylamin, das einen gegenüber OH-Gruppen reaktiven Substituenten, beispielsweise eine α-Chlor-β-Hydroxy-, eine 1-(Sulfatoethylsulfon)- oder eine Sulfatoethyl-Substitution, aufweist, bei einem pH-Wert von 9 bis 14, vorzugsweise von 9,5 bis 13, umsetzt. Die Umsetzungstemperatur beträgt zweckmäßigerweise 40 bis 100°C. Das $C_2$-$C_5$-Alkylamin wird, je nach gewünschtem Substitutionsgrad der Stärke, im molaren Verhältnis Alkylamin:einer Anhydroglukoseeinheit von 0,1:1 bis zweckmäßigerweise 4:1 umgesetzt.

Beispiele für die vorstehend genannten Alkylamine, die zur Modifizierung der Stärke eingesetzt werden, sind Glycidyltrimethylammoniumsulfat, Sulfatoethyltrimethylammoniumsulfat oder -chlorid, Aminoethylsulfat, 3-Chlor-2-hydroxypropyltrimethylammonium sulfat oder -chlorid und Aminopropylsulfatoethylsulfon.

Die zur Herstellung der aminierten Cellulose-Regeneratfasern eingesetzten Stärkeether lassen sich aufgrund ihrer Wasserlöslichkeit in guter Verteilung direkt in die Spinnmasse einrühren, bevorzugt in wäßrigem Medium und gegebenenfalls mit Hilfe von Emulgatoren und zeigen mit der Viskose eine gute Verträglichkeit. Der Zusatz des fließfähigen Stärkeethers erfolgt in einer Menge von 1 bis 20 %, vorzugsweise 1 bis 12 Gew.-%, gerechnet als Trokkensubstanz, bezogen auf den Cellulosegehalt der Spinnmasse, vor der Fällung und Verformung. Die Filtrierbarkeit der Viskose zeigt keine Verschlechterung im Vergleich mit zusatzfreien Proben, so daß im Zuge des Spinnvorganges kein Verstopfen der Spinndüse zu beobachten ist. Die Verformung der Viskose wird nach üblichen und bekannten Methoden durchgeführt, wie z.B. mit Spinndüsen, einem nachfolgenden Fällbad, sowie gegebenenfalls weiteren Nachbehandlungsbädern.

Eine weitere Möglichkeit zur Herstellung der aminierten Cellulose-Regeneratfasern besteht darin, die genannten Stärkederivate in die Alkalicellulose, einer Vorstufe der Viskose, miteinzurühren. Nach Xanthogenierung und Einpressen in ein saures Fällbad wird auch auf diesem Weg eine aminierte Viskosefaser erhalten.

Die nach den beschriebenen Methoden erhaltenen Fasern können nach Verarbeitung zu Geweben und Gewirken nach verschiedenen Verfahren, wie Auszieh-, Klotz- und modernen Druckverfahren, wie Ink-Jet-Verfahren, ohne Einsatz von Salz oder Alkali gefärbt werden.

Gegenstand der vorliegenden Erfindung ist auch ein Verfahren zur Herstellung eines gefärbten oder bedruckten Textilmaterials aus Celluloseregeneratfasern, dadurch gekennzeichnet, daß man einer Viskosemasse, Celluloselösung oder Alkalicellulose besagte Stärkeether zusetzt und beispielsweise nach dem Viskosespinnverfahren oder aus der Celluloselösung Fasern spinnt, die Fasern zu einem Gewebe oder Gewirke verarbeitet und dieses mit einem oder mehreren Reaktivfarbstoffen in Abwesenheit von zusätzlichem Elektrolytsalz oder Alkali färbt oder bedruckt.

Das textile modifizierte Fasermaterial, das in das erfindungsgemäße Färbeverfahren eingesetzt wird, kann in allen Verarbeitungszuständen, so als Garn, Flocke, Kammzug und Stückware (Gewebe) vorliegen.

Das erfindungsgemäße Färben der modifizierten textilen Fasermaterialien erfolgt analog bekannten Färbeweisen und Druckverfahren zum Färben und Bedrucken von Fasermaterialien mit wasserlöslichen textilen Farbstoffen und unter Anwendung der hierfür bekanntermaßen eingesetzten Temperaturbereiche und üblichen Farbstoffmengen, jedoch mit der Ausnahme, daß für die Färbebäder, Klotzverfahren, Druckpasten und Ink-Jet-Formulierungen ein Zusatz von alkalisch wirkenden Verbindungen, wie sie üblicherweise zur Fixierung von faserreaktiven Farbstoffen benutzt werden, nicht nötig ist und auch auf übliche Zusätze an Elektrolytsalzen verzichtet werden kann. Es wird daher bei einem pH-Wert zwischen 4,5 und 8,5 und, bei Verwendung handelsüblicher Reaktivoder Direktfarbstoffe, in Gegenwart eines Elektrolytsalzgehaltes von 0,01 bis 0,5 Gew.-%, bezogen auf die Färbelösung, gefärbt oder gedruckt. Ohne die erfindungsgemäße Aminierung der Cellulosefasern wäre dieser Elektrolytgehalt für ein erfolgreiches Färbeverfahren um den Faktor 20 bis 1000 zu gering.

Färbeverfahren, die erfindungsgemäß eingesetzt werden können, sind beispielsweise die verschiedenen Ausziehverfahren, wie das Färben auf dem Jigger und auf der Haspelkufe oder das Färben aus langer und kurzer Flotte, das Färben in Jet-Färbemaschinen, das Färben nach Klotz-Kaltverweilverfahren oder nach einem Klotz-Heißdampf-Fixierverfahren.

Zu den erfindungsgemäß nutzbaren Färbeverfahren zählen auch die Drucktechniken, einschließlich des Ink-Jet-Printings und des Transferdruckes.

Die Farbstoffe, die zum Färben der modifizierten Cellulose genutzt werden, sind im allgemeinen anionischer Natur. Besonders geeignet sind die faserreaktiven Textilfarbstoffe, die mit Hydroxylgruppen, beispielsweise von Cellulose, oder Amino- und Thiolgruppen, beispielsweise von Wolle und Seide, von synthetischen Polymeren, wie Polyamiden, oder auch modifizierten Polymeren, eben den aminierten Cellulosen, reagieren können und eine kovalente Bindung einzugehen vermögen. Als faserreaktive Komponente an den Textilfarbstoffen seien besonders der Sulfatoethylsulfonyl-, Vinylsulfonyl-, Chlortriazinyl-, Fluortriazinyl-, sowie Kombinationen dieser "Ankersysteme" genannt.

Als Säure- oder Direktfarbstoffe zum Färben oder Bedrucken von erfindungsgemäß modifizierten Cellulosefasern sind beispielsweise die Diamin-Farbstoffe, ®Sirius Lichtecht-Farbstoffe, ®Alphanol-Farbstoffe, ®Cotonerol-Farbstoffe und ®Duasyn-Farbstoffe geeignet, wie z.B. C.I. Acid Black 27 (C.I. No. 26 310), C.I. Acid Black 35 (C.I. No. 26 320), C.I. Acid Blue 113 (C.I. No. 26 360), C.I. Direct Orange 49 (C.I. No. 29 050), C.I. Direct Orange 69 (C.I.

No. 29 055), C.I. Direct Yellow 34 (C.I. No. 29 060), C.I. Direct Red 79 (C.I. No. 29 065), C.I. Direct Yellow

67 (C.I. No. 29 080), C.I. Direct Brown 126 (C.I. No. 29 085), C.I. Direct Red 84 (C.I. No. 35 760), C.I. Direct Red 80 (C.I. No. 35 780), C.I. Direct Red 194 (C.I. No. 35 785), C.I. Direct Red 81 (C.I. No. 28 160), C.I. Direct Red 32 (C.I. No. 35 790), C.I. Direct Blue 162 (C.I. No. 35 770), C.I. Direct Blue 159 (C.I. No. 35 775), C.I. Direct Black 162:1 and C.I. Direct Violet 9 (C.I. No. 27 885).

Wenn nicht anders angegeben, sind die in den nachfolgenden Beispielen angeführten Teile Gewichtsteile und Prozente Gewichtsprozente.

Die Molmassen der verwendeten Stärken sind üblicherweise auf eine Anhydroglucoseeinheit bezogen.

Beispiel 1

a) Herstellung des Stärkeethers:
162 g (1 mol) Kartoffelstärke, technisch trocken, werden in einem Kneter in 500 ml Wasser, in dem zuvor 26,4 g (0,66 mol) Ätznatron gelöst wurden, eingetragen. Anschließend werden zu dieser Mischung 130 g (0,6 mol) 2,3-Epoxypropyltrimethylammoniumchlorid als 70 %ige Lösung in Wasser gegeben. Die Mischung wird 4 Stunden bei 60°C geknetet, auf Raumtemperatur abgekühlt und mit Schwefelsäure auf pH 6 gestellt. Die Viskosität beträgt 5,6 Pas bei 50°C und 19,6 Pas bei 20°C.

Zur weiteren Charakterisierung des Stärkederivates werden 5 Teile der viskosen Masse in 100 Teilen Wasser gelöst und mittels einer Membranentsalzungstechnik von nicht umgesetztem Epoxyd und Neutralisationssalzen befreit. Das gereinigte Stärkederivat wird bis zur Trockene im Vakuum eingedampft. Die Bestimmung des

Substitutionsgrades erfolgt über eine Stickstoffbestimmung der modifizierten Stärke. Der Stickstoffgehalt betrug im vorligenden Fall 3,5 %. Der Substitutionsgrad berechnet sich nach folgenden Formeln:

$$162 + 151/14 \times [\%N] = MW$$

$$[\%N]/14 \times MW : 100 = \text{Substitutionsgrad}$$

Die modifizierte Stärke hat damit einen Substitutionsgrad von 0,67.

b) Das so erhaltene Stärkederivat wird wie folgt in eine betriebsübliche Spinnviskose mit einem Cellulosegehalt von 8,9 %, einem Alkaligehalt von 5 % und einer Viskosität bei 30°C von 38 Kugelfallsekunden eingearbeitet: 50 Teile der modifizierten Stärke werden mit 436 Teilen Spinnviskose vermischt. Diese Vormischung wird in 2522 Teile Spinnviskose eingerührt.
Nach dem Entgasen wird die Spinnmasse nach betriebsüblichen Viskosespinnverfahren in ein schwefelsaures natrium- und zinksulfathaltiges Bad zu Fasern versponnen, in sauren Bädern verstreckt, geschnitten, gewaschen, präpariert und getrocknet.

c) 10 Teile dieser trockenen Viskosefasern werden dann in einer Färbeapparatur mit 100 Teilen Wasser versetzt. Man heizt auf 60°C auf und dosiert insgesamt 0,1 Teile eines 50 %igen elektrolythaltigen (vorwiegend natriumchloridhaltigen) Farbstoffpulvers der Formel, bekannt aus der DE-A-1 943 904,

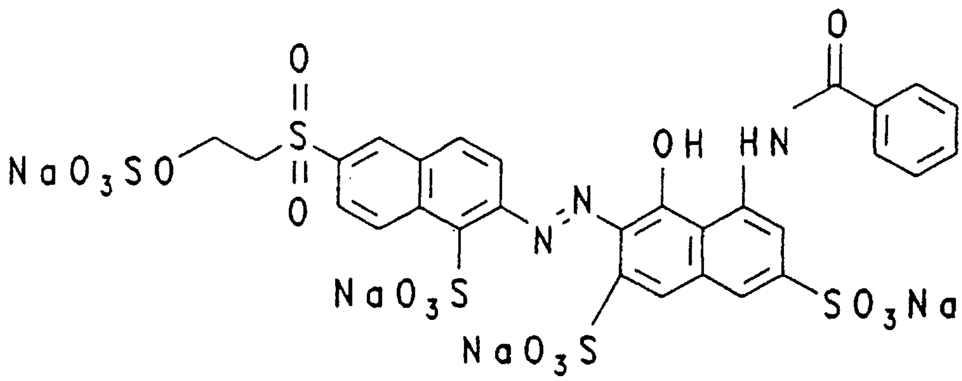

über eine Zeit von 30 min zu. Nach einer Nachlaufzeit von 5 min wird die fast farblose Restflotte abgelassen und das Material nach gängigen Methoden ausgewaschen und getrocknet. Man erhält eine farbstarke tiefrote Färbung mit sehr guten Gebrauchsechtheiten.

Beispiel 2

10 Teile der entsprechend Beispiel 1 modifizierten Viskosefasern werden in einen Färbeapparat überführt und in einem Flottenverhältnis von 1:10 mit einer wäßrigen Flotte behandelt, die - bezogen auf das Warengewicht der trockenen Ware - 0,1 Teile eines Reaktivfarbstoffes der Formel, bekannt aus der EP-A-0 457 715, Beispiel 106,

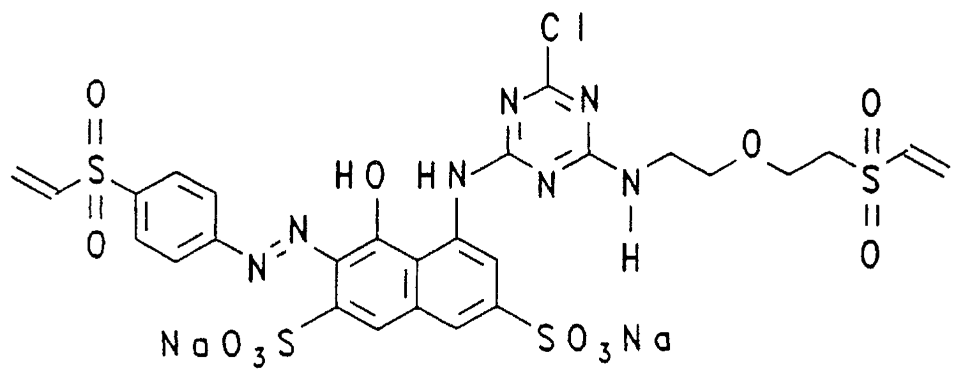

gelöst enthält, behandelt. Man färbt die Faser 30 Minuten bei 60°C. Die Weiterbehandlung der so erzeugten Färbung erfolgt durch Spülen und Seifen in der üblichen Weise. Man erhält eine tiefrote Färbung mit sehr guten Gebrauchsechtheiten.

Beispiel 3

In eine wie unter Beispiel 1 beschriebene Spinnviskose wird eine entsprechend den folgenden Angaben synthetisierte Stärke untergemischt:
200 g (1,2 mol) Maisstärke werden in einem 2 l Kolben mit abwärtsbewegendem Rührer in 500 ml Wasser und 24 g (0,6 mol) Ätznatron eingetragen. Anschließend werden zu dieser Mischung 113 g (0,4 mol) Sulfatoethyl-trimethylammoniumsulfat, gelöst in 300 ml Wasser, gegeben. Die Mischung wird 6 Stunden bei 85°C gerührt, gegebenenfalls durch weitere Wasserzugabe rührfähig gehalten, auf Raumtemperatur abgekühlt und mit Schwefelsäure auf pH 6 gestellt. Der Stärkeether hat einen Substitutionsgrad von 0,3.

Das Produkt wird wie unter Beispiel 1 beschrieben in die Viskose eingerührt. Nach dem Entgasen wird die Spinnmasse nach betriebsüblichen Viskosespinnverfahren in ein schwefelsaures, natrium- und zinksulfathaltiges Bad zu Fasern versponnen, in sauren Bädern verstreckt, geschnitten, gewaschen, präpariert und getrocknet.

Nach dem Weben erhält man so ein textiles Viskosegewebe, das direkt in einem Färbeprozeß nach dem

Klotz-Verfahren weiterverarbeitet werden kann. Hierzu wird eine wäßrige Farbstofflösung, die in 1000 Vol.-Teilen 20 Teile des Farbstoffs der Formel

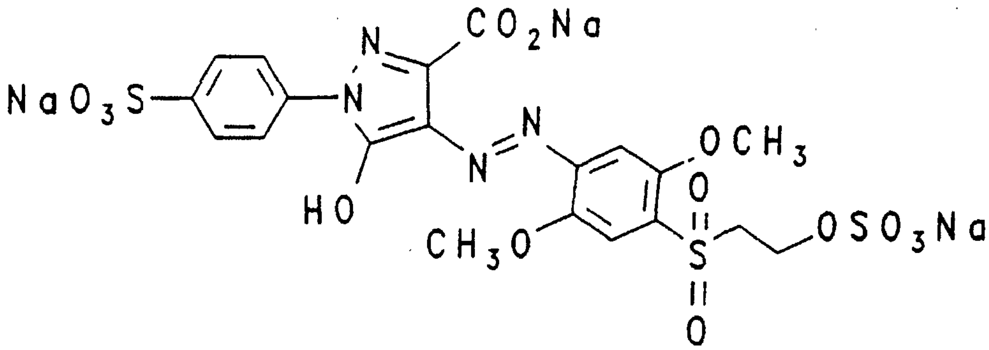

bekannt aus der EP-A-0 158 233, Beispiel 1 und 3 Teile eines handelsüblichen nichtionogenen Benetzungsmittels gelöst enthält, mittels eines Foulards mit einer Flottenaufnahme von 80 %, bezogen auf das Gewicht des Gewebes, bei 25°C auf das Gewebe aufgebracht. Das mit der Farbstofflösung geklotzte Gewebe wird auf eine Docke gewickelt, in eine Plastikfolie gewickelt und während 4 Stunden bei 40 bis 50°C liegen gelassen und danach mit kaltem und heißem Wasser, das gegebenenfalls ein handelsübliches Tensid enthalten kann, und gegebenenfalls anschließend nochmals mit kaltem Wasser gespült und getrocknet. Es wird eine farbstarke, gleichmäßig gefärbte gelbe Färbung erhalten, die gute Allgemeinechtheiten, insbesondere gute Reib- und Lichtechtheiten, besitzt.

Beispiel 4

Eine wie unter Beispiel 1 beschriebene modifizierte Spinnviskose wird nach den für Spinnviskosen üblichen Prozeßschritten zu einer Faser versponnen, die man in einem Ausziehverfahren ohne Salz- und Alkalizusätze reaktiv einfärbt. Dazu wickelt man 30 Teile der Viskosefaser auf eine Kreuzspule und behandelt das Garn in einer Garnfärbeapparatur, die 450 Teile, bezogen auf das Gewicht der Ware, einer Flotte, die 0,6 Teile, bezogen auf das Warenanfangsgewicht eines elektrolythaltigen Farbstoffs (überwiegend natriumchloridhaltig) der allgemeinen Formel, bekannt aus der DE-A-2 840 380, Beispiel 1

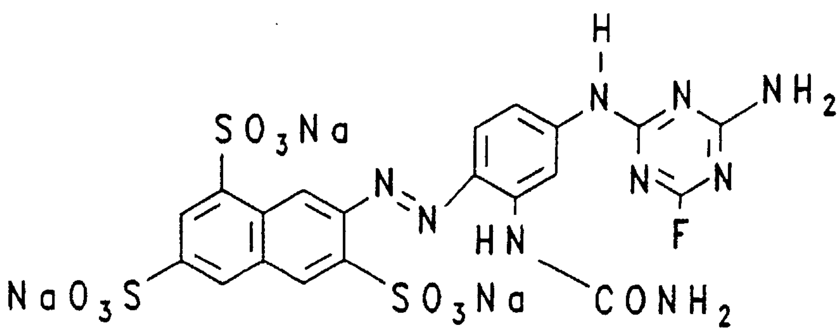

enthält und heizt auf 60°C auf, wobei die Flotte im Wechsel von innen nach außen und von außen nach innen gepumpt wird. Nach 60 min bei dieser Temperatur läßt man die Flotte ab, spült und wäscht nach den üblichen Konditionen die erhaltene Färbung nach. Man erhält eine egal gelb gefärbte Faser mit den allgemein guten Echtheiten für Reaktivfarbstoffe.

Weitere Herstellungsbeispiele 5 - 7 für modifizierte Stärkeether:

Analog zu Beispiel 1 werden jeweils 162 g Kartoffelstärke in 500 ml Wasser und 26,4 g Ätznatron eingetragen. Zu dieser Mischung werden jeweils die folgenden Modifikatoren zugegeben und wie in Beispiel 1 weiterverarbeitet und

der Substitutionsgrad bestimmt:

5) Aminopropylsulfatoethylsulfon der Formel

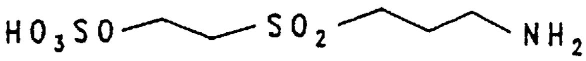

Substitutionsgrad: 0.26.

6) 3-Chlor-2-hydroxypropyltrimethylammoniumchlorid Substitutionsgrad: 0,35

7) Aminoethylschwefelsäure Substitutionsgrad: 0.31

Beispiele für Färbungen mit Direktfarbstoffen:

Beispiel 8

Man verfährt entsprechend den Angaben des Beispiels 1 und erhält nach dem Weben ein textiles Viskosegewebe, das direkt in einem Färbeprozeß nach dem Klotz-Verfahren weiterverarbeitet werden kann. Hierzu wird eine Farbstofflösung, die in 1000 Vol.-Teilen 20 Teile des Säurefarbstoffs der Formel

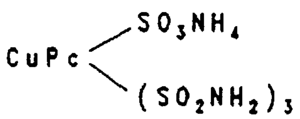

(Pc = Phthalocyanin)
(C.I. Direct Blue 199) und 3 Teile eines handelsüblichen nichtionogenen Benetzungsmittels gelöst enthält, mittels eines Foulards mit einer Flottenaufnahme von 80 %, bezogen auf das Gewicht des Gewebes, bei 25°C auf das Gewebe aufgebracht. Die Farbstofflösung wurde zuvor mit Essigsäure auf einen pH-Wert von 5 gestellt. Das mit der Farbstofflösung geklotzte Gewebe wird anschließend 2 Minuten gedämpft. Die Weiterbehandlung der so erzeugten Färbung erfolgt durch Spülen und Seifen in üblicher Weise. Es resultiert eine kräftige Türkisfärbung mit sehr guten Allgemeinechtheiten.

Beispiel 9

Eine wie in Beispiel 3 modifizierte Viskose wird mittels einer oder zweier Walzen zur Führung und Spannung des Gewebes unter einem Ink-Jet-Druckwerk durchgeführt und mit wäßrigen Lösungen von Direktfarbstoffen bedruckt. Um mehrfarbige Drucke zu erhalten, wird ein Vierfarbdruck mit den Grundfarben für die subtraktive Farbmischung (Gelb, Cyan, Magenta und Schwarz) ausgeführt. Als Cyan-Farbstoff wurden C.I. Direct Blue 199, als Gelb-Farbstoff C.I. Direct Yellow 34 (C.I. No. 29060), als Magenta-Farbstoff C.I. Direct Red 79 (C.I. No. 29065) und als Schwarz-Komponente C.I. Direct Black 162:1 verwendet. Der Drucker arbeitet nach dem "Drop on Demand"-Verfahren und der Tintentropfen wird thermisch (Bubble jet-Verfahren) erzeugt. Das bedruckte Gewebe wird anschließend 2 Minuten gedämpft und anschließend in üblicher Weise gespült und geseift. Der resultierende Druck verfügt über gute Allgemeinechtheiten.

Beispiel 10

Man arbeitet entsprechend Beispiel 6, arbeitet auf und webt.
Eine so modifizierte Viskose wird auf eine rotierende Walze aufgebracht. Ein auf der Basis der "Continuous Flow" Technik arbeitender Druckkopf gibt nun kontinuierlich Tropfen von Direktfarbstoff ab, die je nach Steuerung durch einen Computer, die Viskose erreichen oder abgelenkt werden. Um mehrfarbige Drucke zu erhalten, wird ein Vierfarbdruck mit den Grundfarben für die substraktive Farbmischung (Gelb, Cyan, Magenta und Schwarz) ausgeführt. Als Cyan-Farbstoff wird C.I. Blue 199, als Gelb-Farbstoff C.I. Direct Yellow 34, als Magenta-Farbstoff C.I. Direct Red 81 und als Schwarz-Komponente C.I. Acid Black 35 verwendet. Das bedruckte Gewebe wird anschließend 2 Minuten gedämpft und anschließend in üblicher Weise gespült und geseift. Der resultierende Druck verfügt über gute Allgemeinechtheiten.

Beispiel 11

Eine nach den Angaben des Beispiels 1 hergestellte Viskosefaser wird nach Weiterverarbeitung nach den für Viskosefasern üblichen Prozeßschritten in ein Gewebe überführt und gefärbt.

Dazu wird das Gewebe mittels zweier Walzen zur Führung und Spannung des Gewebes unter einem Ink-Jet-Druckwerk durchgeführt und mit wäßrigen Lösungen von Direktfarbstoffen bedruckt. Der Drucker arbeitet nach dem "Drop on Demand"-Verfahren und der Tintentropfen wird durch einen Druckstoß in der Düse (Piezzo-Verfahren) erzeugt. Um mehrfarbige Drucke zu erhalten, wird ein Vierfarbdruck mit den Grundfarben für die substraktive Farbmischung (Gelb, Cyan, Magenta und Schwarz) ausgeführt. Als Cyan-Farbstoff wird C.I. Direct Blue 199, als Gelb-Farbstoff C.I. Direct Yellow 67, als Magenta-Farbstoff C.I. Direct Red 81 und als Schwarz-Komponente C.I. Acid Black 27 verwendet. Das bedruckte Gewebe wird anschließend 2 Minuten gedämpft und anschließend in üblicher Weise gespült und geseift. Der resultierende Druck verfügt über gute Allgemeinechtheiten.

Weitere Beispiele

Man verfährt entsprechend den Angaben des Beispiels 1 und färbt die modifizierte Viskosefaser unter Verwendung der nachfolgenden aufgeführten Farbstoffe und erhält ähnlich gute Ergebnisse:

| | |
|---|---|
| C.I. Direct Violett 9 | C.I. No. 27885 |
| C.I. Direct Brown 126 | C.I. No. 29085 |
| C.I. Direct Orange 69 | C.I. No. 29055 |
| C.I. Acid Blue 113 | C.I. No. 26360 |
| C.I. Acid Blue 40 | C.I. No. 62125 |

## Patentansprüche

1. Aminierte Cellulose-Regeneratfasern, hergestellt, indem man einer Viskosemasse, Alkalicellulose oder Celluloselösung eine mit einer Alkylamin-Verbindung veretherte Stärke mit einem Polymerisationsgrad zwischen 100 und 1000 Anhydroglucoseeinheiten zusetzt und daraus Fasern spinnt, **dadurch gekennzeichnet, daß** man der Viskosemasse, Alkalicellulose oder Celluloselösung eine mit einem Substitutionsgrad zwischen 0,1 und 3 durch eine oder mehrere mit $C_2$-$C_5$-Alkyl-ammonium-Resten oder $-O-(CH_2)_x-SO_2-(CH_2)_y-N^{\oplus}R_3A^{\ominus}$ veretherte, wasserlösliche Stärke in einer Konzentration von 1 bis 20 Gew.-%, gerechnet als Trockengewicht, bezogen auf den Cellulosegehalt der Spinnmasse, beimischt und daraus Fasern spinnt, wobei die Alkylammoniumreste im Alkylrest noch mit 1 bis 2 weiteren Hydroxy- und Methoxygruppen substituiert sein können und deren Ammoniumgruppe eine mit $C_1$-$C_4$-Alkylgruppen substituierte quartäre Ammoniumgruppe ist und wobei x und y jedes die Zahl 2 oder 3 ist, R gleich oder verschieden Methyl oder Ethyl ist und $A^{\ominus}$ ein Anion bedeutet.

2. Aminierte Cellulose-Regeneratfasern nach Anspruch 1, **dadurch gekennzeichnet, daß** die Ethergruppen der veretherten Stärke Gruppen der Formeln $-O-(CH_2)_x-N^{\oplus}R_3A^{\ominus}$, $-O-(CH_2)_x-SO_2-(CH_2)_y-N^{\oplus}R_3A^{\ominus}$ oder $-O-CH_2-CHOH-CH_2-N^{\oplus}R_3A^{\ominus}$ sind, wobei x und y jedes die Zahl 2 oder 3 ist, R gleich oder verschieden Methyl oder Ethyl ist und $A^{\ominus}$ ein Anion bedeutet.

3. Aminierte Cellulose-Regeneratfasern nach Anspruch 1 oder 2, **dadurch gekennzeichnet, daß** die Ethergruppen der veretherten Stärke Gruppen der Formeln $-O-CH_2-CHOH-CH_2-{}^{\oplus}N(CH_3)_3A^{\ominus}$ oder $-O-CH_2CH_2-{}^{\oplus}N(CH_3)_3A^{\ominus}$ sind.

4. Aminierte Cellulose-Regeneratfasern nach mindestens einem der Ansprüche 1 bis 3, **dadurch gekennzeichnet, daß** die veretherte Stärke in einer Konzentration von 1 bis 12 Gew.-%, gerechnet als Trockengewicht, bezogen auf den Cellulosegehalt der Spinnmasse, zugegeben worden ist.

5. Verwendung einer mit einem Substitutionsgrad zwischen 0,1 und 3 durch einen oder mehrere $C_2$-$C_5$-Alkyl-ammoniumreste oder $-O-(CH_2)_x-SO_2-(CH_2)_y-N^{\oplus}R_3A^{\ominus}$ veretherte, wasserlösliche Stärke mit einem Polymerisationsgrad

zwischen 100 und 1000 Anhydrogluoseeinheiten, wobei die Alkyl-ammoniumreste im Alkylrest durch 1 bis 2 Hydroxygruppen oder Methoxygruppen substituiert sein können und deren Ammoniumgruppe eine mit $C_1$-$C_4$-Alkylgruppe substituierte quartäre Ammoniumgruppe ist und wobei x und y jedes die Zahl 2 oder 3 ist, R gleich oder verschieden Methyl oder Ethyl ist und $A^{\ominus}$ ein Anion bedeutet, zur Herstellung eines gefärbten oder bedruckten Textilmaterials aus Celluloseregeneratfasern, **dadurch gekennzeichnet, daß** man diese einer Viskosemasse, Alkalicellulose oder Celluloselösung in einer Konzentration von 1 bis 20 Gew.-%, gerechnet als Trockengewicht und bezogen auf den Cellulosegehalt der Spinnmasse, zumischt, die so erhaltenen Celluloseregeneratfasern zu einem Gewebe oder Gewirke verarbeitet und diese in Abwesenheit von zusätzlichem Elektrolytsalz und Alkali mit einem oder mehreren Reaktivfarbstoffen oder mit einem Säure- oder Direktfarbstoff bei einem pH-Wert zwischen 4,5 und 8,5 färbt oder bedruckt.

6. Verwendung nach Anspruch 5, **dadurch gekennzeichnet, daß** der Substitutionsgrad der veretherten Stärke zwischen 0,11 und 2 beträgt.

7. Verwendung nach Anspruch 5 oder 6, **dadurch gekennzeichnet, daß** die Ethergruppen in der veretherten Stärke Gruppen der Formeln $-O-(CH_2)_x-^{\oplus}NR_3A^{\ominus}$, $-O-(CH_2)_x-SO_2-(CH_2)_y-^{\oplus}NR_3A^{\ominus}$ oder $-O-CH_2-CHOH-CH_2-^{\oplus}NR_3A^{\ominus}$ sind, wobei x und y jedes die Zahl 2 oder 3 ist, R gleich oder verschieden Methyl oder Ethyl ist und $A^{\ominus}$ ein Anion bedeutet.

8. Verfahren zur Herstellung eines gefärbten oder bedruckten Textilmaterials aus Celluloseregeneratfasern, **dadurch gekennzeichnet, daß** man die gemäß einem oder mehreren der Ansprüche 1 bis 4 hergestellten aminierten Celluloseregeneratfasern zu einem Gewebe oder Gewirke verarbeitet und dieses mit einem oder mehreren Reaktivfarbstoffen, in Abwesenheit von zusätzlichen Elektrolytsalz und Alkali, oder mit einem Säure- oder Direktfarbstoff bei einem pH-Wert zwischen 4,5 und 8,5 färbt oder bedruckt.

9. Wasserlösliche veretherte Stärke mit einem Polymerisationsgrad zwischen 100 und 1000 Anhydroglucoseeinheiten, **gekennzeichnet durch** die Ethergruppen $-O-(CH_2)_x-SO_2-(CH_2)_y-^{\oplus}NR_3A^{\ominus}$, wobei x und y jedes die Zahl 2 oder 3 ist, R gleich oder verschieden Methyl oder Ethyl ist und $A^{\ominus}$ ein Anion bedeutet, mit einem Substitutionsgrad zwischen 0,1 und 3.

10. Veretherte Stärke nach Anspruch 9, **gekennzeichnet durch** einen Substitutionsgrad zwischen 0,11 und 2.

11. Verfahren zur Herstellung einer veretherten Stärke nach mindestens einem der Ansprüche 9 bis 10, **dadurch gekennzeichnet, daß** man eine Stärke mit einer der entsprechenden Ethergruppe zugrundeliegenden Ammoniumverbindung, die einen gegenüber OH-Gruppen reaktiven Substituenten aufweist, bei einem pH-Wert zwischen 9 und 14 umsetzt.

## Claims

1. Aminated regenerated cellulose fibers produced by adding to a viscose dope, alkali cellulose or cellulose solution a starch that has been etherified with an alkylamine compound and has a degree of polymerization of between 100 and 1000 anhydroglucose units, and spinning fiber therefrom, **characterized in that** the viscose dope, alkali cellulose or cellulose solution is admixed with a water-soluble starch that has been etherified, with a degree of substitution between 0.1 and 3, by one or more $C_2$-$C_5$ alkylammonium residues or $-O-(CH_2)_x-SO_2-(CH_2)_y-N^{\oplus}R_3A^{\ominus}$, in a concentration of 1% to 20% by weight, calculated as dry weight and based on the cellulose content of the spinning dope, and fibers spun therefrom, wherein the alkylammonium residues can be further substituted in the alkyl residue with one or two additional hydroxyl or methoxy groups and their ammonium group is a quaternary ammonium group substituted with $C_1$-$C_4$ alkyl groups, and wherein each of x and y is 2 or 3, each R independently is methyl or ethyl, and $A^{\ominus}$ is an anion.

2. Aminated regenerated cellulose fibers according to Claim 1, **characterized in that** the ether groups of the etherified starch are groups of formula $-O-(CH_2)_x-N^{\oplus}R_3A^{\ominus}$, $-O-(CH_2)_x-SO_2-(CH_2)_y-N^{\oplus}R_3A^{\ominus}$ or $-O-CH_2-CHOH-CH_2-N^{\oplus}R_3A^{\ominus}$, wherein each of x and y is 2 or 3, each R independently is methyl or ethyl, and $A^{\ominus}$ is an anion.

3. Aminated regenerated cellulose fibers according to Claim 1 or 2, **characterized in that** the ether groups of the etherified starch are groups of formula $-O-CH_2-CHOH-CH_2-^{\oplus}N(CH_3)_3A^{\ominus}$ or $-O-CH_2CH_2-^{\oplus}N(CH_3)_3A^{\ominus}$.

**4.** Aminated regenerated cellulose fibers according to at least one of Claims 1 to 3, **characterized in that** the etherified starch is added in a concentration of 1% to 12% by weight, calculated as dry weight and based on the cellulose content of the spinning dope.

**5.** Use of a water-soluble starch that has been etherified with a degree of substitution between 0.1 and 3 by one or more $C_2$-$C_5$ alkylammonium residues or $-O-(CH_2)_x-SO_2-(CH_2)_y-N^{\oplus}R_3A^{\ominus}$, and has a degree of polymerization of between 100 and 1000 anhydroglucose units, wherein the alkylammonium residues can be substituted in the alkyl residue by 1 or 2 hydroxyl or methoxy groups and their ammonium group is a quaternary ammonium group substituted with $C_1$-$C_4$ alkyl groups, and wherein each of x and y is 2 or 3, each R independently is methyl or ethyl, and $A^{\ominus}$ is an anion, to produce a dyed or printed textile material from regenerated cellulose fibers, **characterized in that** the starch is added to a viscose dope, alkali cellulose or cellulose solution at a concentration of 1 to 20% by weight, calculated as dry weight and based on the cellulose content of the spinning dope, that the aminated regenerated cellulose fibers so obtained are processed into a woven or knitted fabric, and that this is dyed or printed, in the absence of additional electrolyte salt and alkali, using one or more reactive dyes or an acid dye or direct dye at a pH between 4.5 and 8.5.

**6.** Use according to Claim 5, **characterized in that** the degree of substitution of the etherified starch is between 0.11 and 2.

**7.** Use according to Claim 5 or 6, **characterized in that** the ether groups in the etherified starch are groups of formula $-O-(CH_2)_x-{}^{\oplus}NR_3A^{\ominus}$, $-O-(CH_2)_x-SO_2-(CH_2)_y-{}^{\oplus}NR_3A^{\ominus}$ or $-O-CH_2-CHOH-CH_2-{}^{\oplus}NR_3A^{\ominus}$, wherein each of x and y is 2 or 3, each R independently is methyl or ethyl, and $A^{\ominus}$ is an anion.

**8.** Process for producing a dyed or printed textile material from regenerated cellulose fibers, **characterized in that** the aminated regenerated cellulose fibers produced according to one or more of Claims 1 to 4 are processed into a woven or knitted fabric, and **that** this is dyed or printed with one or more reactive dyes in the absence of additional electrolyte salt and alkali, or with an acid dye or direct dye at a pH between 4.5 and 8.5.

**9.** Water-soluble etherified starch with a degree of polymerization between 100 and 1000 anhydroglucose units, **characterized by** the ether groups $-O-(CH_2)_x-SO_2-(CH_2)_y-{}^{\oplus}NR_3A^{\ominus}$, wherein each of x and y is 2 or 3, each R independently is methyl or ethyl, and $A^{\ominus}$ is an anion, the starch having a degree of substitution between 0.1 and 3.

**10.** Etherified starch according to Claim 9, **characterized by** a degree of substitution between 0.11 and 2.

**11.** Process for preparing an etherified starch according to at least one of Claims 9 and 10, **characterized in that** a starch is reacted at a pH between 9 and 14 with an ammonium compound on which the corresponding ether group is based and which has a substituent that is reactive toward OH groups.

## Revendications

**1.** Fibres aminées de cellulose régénérée fabriquées en ajoutant à une masse de viscose, à de l'alcalicellulose ou à une solution de cellulose un amidon éthérifié par un composé d'alkylamine, avec un degré de polymérisation entre 100 et 1000 unités d'anhydroglucose et en en filant des fibres **caractérisées en ce qu'**on mélange à la masse de viscose, à l'alcalicellulose ou à la solution de cellulose un amidon soluble dans l'eau, éthérifié avec un degré de substitution entre 0,1 et 3 par un ou plusieurs restes $C_2$-$C_5$-alkylammonium ou $-O-(CH_2)_x-SO_2-(CH_2)_y-N^{\oplus}R_3A^{\ominus}$, avec une concentration de 1 à 20 % en poids, calculée en poids sec par rapport à la teneur en cellulose de la masse à filer et qu'on en file des fibres, les restes alkylammonium pouvant encore être substitués dans le reste alkyle par 1 à 2 autres groupes hydroxy ou méthoxy et leur groupe ammonium étant un groupe ammonium quaternaire substitué par des groupes $C_1$-$C_4$-alkyle et x et y étant chacun le nombre 2 ou 3, chaque R étant méthyle ou éthyle et $A^{\ominus}$ représentant un anion.

**2.** Fibres aminées de cellulose régénérée selon la revendication 1, **caractérisées en ce que** les groupes éther de l'amidon éthérifié sont des groupes des formules $-O-(CH_2)_x-N^{\oplus}R_3A^{\ominus}$, $-O-(CH_2)_x-SO_2-(CH_2)_y-N^{\oplus}R_3A^{\ominus}$ ou $-O-CH_2-CHOH-CH_2-N^{\oplus}R_3A^{\ominus}$, x et y étant chacun le nombre 2 ou 3, chaque R étant méthyle ou éthyle et $A^{\ominus}$ représentant un anion.

**3.** Fibres aminées de cellulose régénérée selon l'une quelconque des revendications 1 ou 2, **caractérisées en ce**

**que** les groupes éther de l'amidon éthérifié sont des groupes des formules $-O-CH_2-CHOH-CH_2-^{\oplus}N(CH_3)_3A^{\ominus}$ ou $-O-CH_2CH_2-^{\oplus}N(CH_3)_3A^{\ominus}$.

4. Fibres aminées de cellulose régénérée selon au moins l'une quelconque des revendications 1 à 3, **caractérisées en ce que** l'amidon éthérifié a été ajouté avec une concentration entre 1 et 12 % en poids, calculée en poids sec par rapport à la teneur en cellulose de la masse à filer.

5. Utilisation d'un amidon soluble dans l'eau, éthérifié avec un degré de substitution entre 0,1 et 3 par un ou plusieurs restes $C_2$-$C_5$-alkylammonium ou $-O-(CH_2)_x-SO_2-(CH_2)_y-N^{\oplus}R_3A^{\ominus}$, avec un degré de polymérisation entre 100 et 1000 unités d'anhydroglucose, les restes alkylammonium pouvant être substitués dans le reste alkyle par 1 à 2 groupes hydroxy ou méthoxy et leur groupe ammonium étant un groupe ammonium quaternaire substitué par un groupe $C_1$-$C_4$-alkyle et x et y étant chacun le nombre 2 ou 3, chaque R étant méthyle ou éthyle et $A^{\ominus}$ représentant un anion, pour la fabrication d'un matériau textile en fibre de cellulose régénérée teint ou imprimé, **caractérisé en ce qu'**on mélange ledit amidon à une masse de viscose, à de l'alcalicellulose ou à une solution de cellulose avec une concentration entre 1 et 20 % en poids, calculée en poids sec par rapport à la teneur en cellulose de la masse à filer, **qu'**on façonne les fibres de cellulose régénérée aminée ainsi obtenues en un tissu ou un maillage et qu'on teint ou imprime ceux-ci en l'absence de sel électrolytique et d'alcali supplémentaires avec un ou plusieurs colorants réactifs ou avec un colorant acide ou direct à une valeur pH entre 4,5 et 8,5.

6. Utilisation selon la revendication 5, **caractérisée en ce que** le degré de substitution de l'amidon éthérifié se situe entre 0,11 et 2.

7. Utilisation selon l'une quelconque des revendications 5 ou 6, **caractérisée en ce que** les groupes éther de l'amidon éthérifié sont des groupes des formules $-O-(CH_2)_x-^{\oplus}NR_3A^{\ominus}$, $-O-(CH_2)_x-SO_2-(CH_2)_y-^{\oplus}NR_3A^{\ominus}$ ou $-O-CH_2-CHOH-CH_2-^{\oplus}NR_3A^{\ominus}$, x et y étant chacun le nombre 2 ou 3, chaque R étant méthyle ou éthyle et $A^{\ominus}$ représentant un anion.

8. Procédé de fabrication d'un matériau textile en fibre de cellulose régénérée teint ou imprimé, **caractérisé en ce qu'**on façonne les fibres de cellulose régénérée aminée, fabriquées selon l'une quelconque ou plusieurs des revendications 1 à 4, en un tissu ou un maillage et **qu'**on teint ou imprime celui-ci avec un ou plusieurs colorants réactifs, en l'absence de sel électrolytique et d'alcali supplémentaires, ou avec un colorant acide ou direct à valeur pH entre 4,5 et 8,5.

9. Amidon éthérifié soluble dans l'eau avec un degré de polymérisation entre 100 et 1000 unités d'anhydroglucose, **caractérisé par** les groupes éther $-O-(CH_2)_x-SO_2-(CH_2)_y-^{\oplus}NR_3A^{\ominus}$, x et y étant chacun le nombre 2 ou 3, chaque R étant méthyle ou éthyle et $A^{\ominus}$ représentant un anion, avec un degré de substitution entre 0,1 et 3.

10. Amidon éthérifié selon la revendication 9, **caractérisé par** une degré de substitution entre 0,11 et 2.

11. Procédé de fabrication d'un amidon éthérifié selon au moins l'une quelconque des revendications 9 à 10, **caractérisé en ce qu'**on transforme un amidon avec un composé d'ammonium servant de base au groupe éther correspondant et présentant un substituant réactif aux groupes OH, à valeur pH entre 9 et 14.